# EUROPÄISCHE PATENTSCHRIFT

(11) **EP 0 850 027 B1**
(45) Veröffentlichungstag und Bekanntmachung des Hinweises auf die Patenterteilung: **22.05.2002**
(21) Anmeldenummer: 97903255.4
(22) Anmeldetag: 11.02.1997
(51) Int. Cl.: A61C 17/26, A61C 17/34

(54) **ELEKTRISCHE ZAHNBÜRSTE**
ELECTRIC TOOTHBRUSH
BROSSE A DENTS ELECTRIQUE

(30) Priorität: 10.07.1996 DE 19627752
(43) Veröffentlichungstag der Anmeldung: 01.07.1998
(73) Patentinhaber: Braun GmbH, 61476 Kronberg (DE)
(72) Erfinder: HILFINGER, Peter, D-61350 Bad Homburg (DE); SCHWARZ-HARTMANN, Armin, D-55234 Albig (DE); HERZOG, Karl, D-60489 Frankfurt am Main (DE)
(86) Internationale Anmeldenummer: EP9700617
(87) Internationale Veröffentlichungsnummer: WO9801083

(56) Entgegenhaltungen:
- EP-A- 0 327 876
- WO-A-93/10721
- WO-A-94/23667
- US-A- 3 978 852

## Beschreibung

Die Erfindung betrifft eine elektrische Zahnbürste mit einem Griffteil, in dem ein Elektromotor untergebracht ist und mit einer Welle, die mit dem Elektromotor in Antriebsverbindung steht und mit der ein Bürstenteil mit um eine Achse drehbeweglichem Borstenträger zur Erzeugung einer oszillierenden oder kontinuierlichen Drehbewegung des Borstenträgers koppelbar ist.

Eine Zahnbürste gemäß dem Oberbegriff des Anspruchs 1 ist aus der WO 93/10721 A bekannt.

Eine derartige elektrische Zahnbürste ist auch aus der internationalen Patentanmeldung WO 94/12121 A1 bekannt. Dort ist in dem Bürstenteil eine drehbar gelagerte Bürstenwelle untergebracht, die alternierend angetrieben werden kann. Der Borstenträger ist drehbar an dem Bürstenteil gelagert, wobei die Drehachse der Bürstenwelle und die Drehachse des Borstenträgers etwa quer zueinander angeordnet sind. In dem Ausführungsbeispiel der Figur 9 der internationalen Patentanmeldung WO 94/12121 A1 ist ein T-Stück vorgesehen, das aus einer Längsstange und einem Querstift zusammengesetzt ist. Die Längsstange ist in einer etwa parallel, aber außerhalb ihrer Drehachse angeordneten Bohrung der Bürstenwelle aufgenommen. Der Querstift ist in einer etwa parallel, aber außerhalb seiner Drehachse angeordneten Bohrung des Borstenträgers aufgenommen. Die Längsstange ist in ihrer Bohrung drehbar und in Richtung der Drehachse der Bürstenwelle verschiebbar aufgenommen. Der Querstift ist in seiner Bohrung drehbar aufgenommen, kann jedoch innerhalb seiner Bohrung keine Bewegung in Richtung der Drehachse des Borstenträgers durchführen. Eine alternierende Drehbewegung der Bürstenwelle um ihre Drehachse hat einerseits zur Folge, daß auch der Borstenträger eine alternierende Drehbewegung um seine Drehachse ausführt. Andererseits hat dies zur Folge, daß aufgrund der nicht-vorhandenen Verschiebbarkeit des Querstifts in seiner Bohrung der Borstenträger eine hin- und hergehende Hubbewegung ausführt. Diese Hubbewegung ist parallel zur Drehachse des Borstenträgers ausgerichtet. Die Frequenz der alternierenden Drehbewegung des Borstenträgers ist identisch mit der Frequenz der hin- und hergehenden Hubbewegung des Borstenträgers.

Durch die hin- und hergehende Hubbewegung des Borstenträgers entsteht eine Stocherbewegung der Borsten, mit der Plaque von den Zahnflächen eines Benutzers abgelöst werden kann. Die alternierende Drehbewegung des Borstenträgers bewirkt eine Wischbewegung der Borsten, mit der insbesondere das durch die Stocherbewegung abglöste Plaque von den Zahnflächen entfernt werden kann. Auf diese Weise wird insgesamt eine gute Reinigung der Zähne des Benutzers erreicht.

Allerdings ist diese bekannte Anordnung konstruktiv relativ aufwendig, wobei zusätzlich zu berücksichtigen ist, daß die konstruktiven Mittel zur Erzeugung der Hubbewegung des Borstenträgers unmittelbar unterhalb des Borstenträgers angeordnet sind. In diesen Bereich des Bürstenteils dringt während des Reinigungsvorganges Zahncreme, Speichel oder auch Wasser ein, wobei insbesondere die Zahncreme und die darin enthaltenen Schleifpartikel einen relativ raschen Verschleiß der mechanisch bewegten Teile bedingen. Darüber hinaus führt nur der Borstenträger selbst, nicht aber das gesamte Bürstenteil eine zusätzliche hinund hergehende Hubbewegung aus, was von einem Teil der Benutzer als unangenehm empfunden wird. Schließlich ist aufgrund der speziellen konstruktiven Ausführung dieser bekannten elektrischen Zahnbürste eine starre Kopplung zwischen der Frequenz der hin- und hergehenden Hubbewegung des Borstenträgers und der Frequenz der oszillierenden Drehbewegung des Borstenträgers bedingt. So ist es beispielsweise nicht möglich, mit einfachen konstruktiven Maßnahmen die Frequenz der Hubbewegung des Borstenträgers weiter zu erhöhen, um eine effektivere Stocherbewegung der Borsten auf der Zahnoberfläche zu erreichen, und die Frequenz der oszillierenden Drehbewegung beizubehalten. Schließlich führt diese strenge, phasenstarre Kopplung der beiden Bewegungen des Borstenträgers zu einer von dem Benutzer als störend empfundenen Unruhe des Borstenträgers, welche ein sicheres Positionieren der freien Enden der Borsten auf der Zahnoberfläche erschwert.

Aufgabe der Erfindung ist es, eine elektrische Zahnbürste der eingangs genannten Art zu schaffen, mit der die Zahnreinigung weiter verbessert ist.

Diese Aufgabe wird nach der Erfindung im wesentlichen dadurch gelöst, daß das mit dem Griffteil gekoppelte Bürstenteil eine oszillierende Schwenk- oder Hubbewegung oder dergleichen mit einer Bewegungsrichtung ausführt, die im wesentlichen parallel zur Achse ausgerichtet ist.

Aufgrund dieser Maßnahme ist es nicht mehr erforderlich, zur Erzeugung der Schwenk- oder Hubbewegung notwendige Bauteile in dem Bürstenteil selbst zu positionieren, da die Welle insgesamt bereits im Griffteil einer zur Erzeugung der Hubbewegung des Borstenträgers erforderliche Bewegungskomponente in Form einer Schwenk-, Hub- oder dergleichen Bewegung aufgeprägt bekommt. Das Griffteil ist in der Regel hermetisch gegen das Eindringen von Zahnpasta, Feuchtigkeit oder dergleichen abgedichtet, so daß ein frühzeitiger Verschleiß der in dem Griffteil angeordneten mechanischen Bauteile nicht zu befürchten ist. Weiterhin wird das gesamte, auf die Welle aufgesteckte Bürstenteil und/oder die Welle in diese Schwenk- oder Hubbewegung versetzt, was von der Mehrzahl der Benutzer als angenehm empfunden wird. Schließlich besteht auch die Möglichkeit, die Frequenz der Schwenk- oder Hubbewegung oder dergleichen der Welle frei einzustellen, so daß die starre Kopplung zwischen den Frequenzen der Huboder Schwenkbewegung bzw. der oszillierenden Drehbewegung des Borstenträgers aufgehoben ist.

Nach einer ersten besonders vorteilhaften Ausgestaltung der Erfindung führt das Bürstenteil eine Schwenk- oder Hubbewegung oder dergleichen um eine Achse aus, die im wesentlichen quer zur in Längsrichtung der Welle verlaufenden Achse angeordnet ist. Insbesondere kann das Bürstenteil in dem Griffteil um die Achse schwenkbar nach Art einer Wippe oder dergleichen gelagert sein. Es soll an dieser Stelle darauf hingewiesen werden, daß unter Schwenkbewegung eine Bewegung des Bürstenteils und/oder der Welle über die gesamte Länge, beispielsweise um eine Schwenkachse und unter Hubbewegung die Bewegung des Bürstenteils und/oder der Welle bzw. eines Endabschnitts hiervon zu verstehen sind. Während das Bürstenteil und/oder die Welle beispielsweise nach Art einer Wippe eine Schwenkbewegung insgesamt ausführt, kann die Bewegung der Endpunkte der Wippe, insbesondere bei einem längeren Hebelarm, als eine Art Hubbewegung aufgefaßt werden. Für die verbesserte Zahnreinigung kommt es letztlich im wesentlichen darauf an, daß die Borsten eine Art Stocherbewegung, also eine Bewegung im wesentlichen in Richtung der Borstenlängsachse bzw. der Längsachse oder Drehachse des Borstenträgers ausführen, wofür im wesentlichen die Hubbewegung des freien Endes des Bürstenteils und/oder der Welle ausschlaggebend ist.

Nach einer anderen Ausführungsform der Erfindung hat es sich als äußerst vorteilhaft herausgestellt, daß die Schwenkachse, um die das Bürstenteil und/oder die Welle die Schwenkbewegung ausführen, im Griffteil angeordnet ist. Hierdurch ist es unter Einsatz einfacher konstruktiver Maßnahmen möglich, die Borsten des Borstenträgers in eine Drehbewegung um die Drehachse des Borstenträgers und in eine Hubbewegung in Längsrichtung dieser Achse zu versetzen.

Weiterhin hat sich als vorteilhaft herausgestellt, daß die Frequenz der Schwenkoder Hubbewegung einen größeren Wert, bevorzugt etwa den zwei- bis dreifachen Wert der Frequenz der Drehbewegung aufweist.

Von Vorteil sind die Bewegungsrichtung der Drehbewegung und die Bewegungsrichtung der Schwenk- oder Hubbewegung im wesentlichen rechtwinklig zueinander ausgerichtet.

Die Amplitude der Schwenk- oder Hubbewegung, insbesondere des Borstenträgers bzw. der Borstenenden, liegt im Bereich zwischen etwa ± 0,02 mm und etwa ± 0,2 mm, bevorzugt bei etwa ± 0,05 mm.

Die Frequenz der Drehbewegung ist nach einem bevorzugten Ausführungsbeispiel auf etwa 60 bis 70, bevorzugt etwa 65 Hz eingestellt, während die Frequenz der Schwenk- oder Hubbewegung bei etwa 120 bis 210 Hz, insbesondere etwa 165 Hz, liegt.

Die spezielle Wahl der Frequenzen der Drehbewegung und der Schwenk- oder Hubbewegung ist bevorzugt derart aufeinander abgestimmt, daß eine gleiche Phasenlage der überlagerten Schwingung erst wieder nach einer Mehrzahl von Schwingungszyklen, insbesondere nach mehr als vier Schwingungszyklen, auftritt. Bei unterschiedlichen Frequenzen der beiden Bewegungen des Borstenträgers nimmt die Kurve der resultierenden Bewegungen einen sehr unregelmäßigen Verlauf an. Dieser unregelmäßige Verlauf wiederholt sich nach einer bestimmten Anzahl von Zyklen beider Einzelbewegungen. Nach dem Stand der Technik hat die Hubbewegung eine doppelt so hohe Frequenz wie die oszillierende Drehbewegung, so daß sich der unregelmäßige Verlauf mit der Periodizität der Oszillationszyklen wiederholt. Durch dieses häufige Auftreten des unregelmäßigen Bewegungsverlauf und der damit verbundenen Unruhe in der Bewegung des Borstenträgers fällt es dem Benutzer der Zahnbürste nicht immer leicht, die freien Enden der Borsten sicher und dauerhaft auf die Zähne zu drücken bzw. die Borsten gezielt auf den Zahnoberflächen zu positionieren. Wählt man das Frequenzverhältnis der Frequenzen der Drehbewegung bzw. Schwenk- oder Hubbewegung jedoch so, daß der Quotient nach Herauskürzen identischer Fehler zwei bevorzugt große Primzahlen bzw. Primzahlprodukte aufweist, so treten die Unregelmäßigkeiten im Kurvenverlauf der Gesamtbewegung des Borstenträgers nur recht selten auf. Je seltener diese Unregelmäßigkeiten auftreten, umso ruhiger ist die Bewegung des Borstenträgers und desto leichter fällt es dem Benutzer, die freien Enden der Borsten auf den Zähnen genau zu positionieren. Einzelne Primzahlquotienten für die Frequenzverhältnisse können beispielsweise bei folgenden Quotienten liegen: 23/9, 13/5, 27/10, 28/11, 34/13, 171/65. Bei diesen Verhältnissen wird der Quotient aus den beiden Frequenzen und damit das Verhältnis beider Frequenzen zueinander nur unwesentlich geändert, jedoch liegt eine gleiche Phasenlage nach unterschiedlicher hoher Anzahl von Schwingungs- bzw. Oszillationszyklen, nämlich 9,5, 10, 11, 13, 65 vor. Je größer die Anzahl der Schwingungszyklen ist, umso regelmäßiger und ruhiger ist der Verlauf der resultierenden Bewegung des Borstenträgers.

Insgesamt hat sich gezeigt, daß durch diese unterschiedlichen Frequenzen der Hubbewegung und der Drehbewegung die Reinigung der Zähne eines Benutzers wesentlich verbessert wird. Dies beruht darauf, daß einerseits durch die größere Frequenz der Hubbewegung des Borstenträgers die Stocherbewegung der Borsten verstärkt und damit ein wesentlich verbessertes Ablösen von Plaque von den Zahnflächen des Benutzers erreicht wird. Andererseits wird die Wischbewegung nicht mit dieser größeren Frequenz vorgenommen, so daß ein zu schnelles Hinwegwischen der Borsten über die Zahnflächen vermieden wird. Statt dessen wird die Wischbewegung mit einer kleineren Frequenz durchgeführt, so daß das abgelöste Plaque sicher von den Zahnflächen entfernt und darüberhinaus noch weiteres Plaque abgelöst werden. Die größere Frequenz der Hubbewegung des Borstenträgers wirkt sich somit vorteilhaft auf das Ablösen von Plaque von den Zahnflächen eines Benutzers aus, während die kleinere Frequenz der Drehbewegung des Borstenträgers ein sicheres Wegwischen wie auch weiteres Ablösen von Plaque gewährleistet.

Bei einer vorteilhaften Weiterbildung der Erfindung ist das Verhältnis der Frequenzen der Drehbewegung und der Hubbewegung ein endlicher Wert oder ein periodischer Bruch oder ein nicht-periodischer Bruch. Das Verhältnis der Frequenzen der Drehbewegung und der Hubbewegung kann somit in diesem Rahmen frei gewählt werden. Bei beispielsweise vorgegebener Frequenz für die Drehbewegung kann auf einfache Weise die größere Frequenz für die Hubbewegung durch eine entsprechende Wahl des Frequenzverhältnisses auf den gewünschten Wert eingestellt werden.

Bei einer anderen vorteilhaften Weiterbildung der Erfindung sind die Frequenzen der Drehbewegung und der Hubbewegung unabhängig voneinander. Die Frequenz für die Drehbewegung und die Frequenz für die Hubbewegung können durch entsprechende konstruktive Maßnahmen völlig unabhängig und frei voneinander auf den jeweils gewünschten Wert eingestellt werden.

Bei einer vorteilhaften Ausgestaltung der Erfindung werden die Drehbewegung und die Hubbewegung des Borstenträgers von dem Elektromotor erzeugt. Es ist also nur ein Elektromotor vorgesehen. Die unterschiedlichen Frequenzen für die Drehbewegung und die Hubbewegung können von diesem Elektromotor beispielsweise mit Hilfe eines Getriebes oder dergleichen erzeugt werden. Das Verhältnis der Frequenzen der Drehbewegung und der Hubbewegung ergibt sich dann aus der Getriebeübersetzung. Es ist aber auch möglich, die genannten Frequenzen ohne ein Getriebe zu erzeugen. Dies kann beispielsweise mit Hilfe einer Kupplung oder dergleichen erreicht werden, die zum Beispiel zwischen die Hubbewegung und die mit der kleineren Frequenz laufenden Drehbewegung geschaltet wird.

Bei einer anderen vorteilhaften Ausgestaltung der Erfindung wird die Drehbewegung von dem Elektromotor erzeugt und die Hubbewegung von davon unabhängigen Antriebsmitteln. Es sind also für die Drehbewegung und die Hubbewegung zwei voneinander unabhängige Antriebsmittel vorgesehen. Auf diese Weise ist es ohne weiteres möglich, die Frequenz für die Drehbewegung und die Frequenz für die Hubbewegung völlig unabhängig voneinander auf den jeweils gewünschten Wert einzustellen. Des weiteren ist es ebenfalls möglich, das Verhältnis der Frequenzen der Drehbewegung und der Hubbewegung auf einen gewünschten Wert einzustellen.

Dabei ist es besonders zweckmäßig, wenn die Hubbewegung von einem weiteren Elektromotor oder von einem elektromagnetischen Schwinger oder von einem piezoelektrischen Aktuator erzeugt wird. Für die Drehbewegung wird also der Elektromotor verwendet. Die Hubbewegung wird jedoch durch das zweite Antriebsmittel erzeugt, das vorzugsweise von einem zweiten Elektromotor gebildet wird. Durch eine entsprechende Ansteuerung der beiden Elektromotoren können dann die Frequenz für die Drehbewegung und die Frequenz für die Hubbewegung völlig unabhängig voneinander eingestellt werden.

Bei einer vorteilhaften Ausgestaltung der Erfindung ist die Hubbewegung des Borstenträgers bei Überschreiten einer auf die Borsten einwirkenden Kraft abschaltbar. Die Hubbewegung des Borstenträgers erzeugt, wie erläutert, eine Stocherbewegung der Borsten, mit der Plaque von den Zahnflächen abgelöst wird. Durch die erfindungsgemäße größere Frequenz der Hubbewegung wird diese Stocherbewegung noch verstärkt. Es ist nun bekannt, daß viele Benutzer von elektrischen Zahnbürsten häufig die Borstenenden mit einer zu großen Kraft an die Zahnflächen andrücken. Dies hat zwar eine weitere Verstärkung der Stocherbewegung der Borsten zur Folge. Es ist jedoch ebenfalls bekannt, daß eine zu große, auf die Zahnflächen bzw. das Zahnfleisch einwirkende Kraft eine Schädigung zur Folge haben kann. Damit dies vermieden ist, wird die Hubbewegung abgeschaltet, sobald die auf die Borsten einwirkende Kraft einen vorgegebenen Wert überschreitet. Damit werden mögliche Schädigungen sicher vermieden. Ebenfalls wird durch das Abschalten der Hubbewegung dem Benutzer auf eine taktile und/oder akustische Art und Weise signalisiert, daß er die Borsten zu stark an die Zahnflächen andrückt. Dies ergibt sich daraus, daß der Benutzer die Stocherbewegung der Borsten als Vibrationen auf den Zahnflächen spürt und er somit das Abschalten dieser Stocherbewegung zur Kenntnis nimmt. Das beschriebene Abschalten der Hubbewegung hat somit in besonders vorteilhafter Weise eine Schutz- und Signalfunktion für den Benutzer.

Bei einer weiteren vorteihaften Ausgestaltung der Erfindung ist die Hubbewegung durch einen Benutzer abschaltbar. Der Benutzer kann also die Hubbewegung des Borstenträgers und damit die Stocherbewegung der Borsten auf den Zahnflächen nach Belieben ein- und ausschalten. Dies kann beispielsweise zweckmäßig sein, wenn der Benutzer nur sein Zahnfleisch massieren will und er dabei die Stocherbewegung als unangenehm empfindet. In diesem Fall kann der Benutzer die Stocherbewegung vorübergehend abschalten.

Bei einer vorteilhaften Ausgestaltung der Erfindung ist die Drehbewegung alternierend und erfolgt um eine etwa parallel zu den Borsten des Borstenträgers ausgerichtete Achse. Es hat sich herausgestellt, daß auf diese Weise eine besonders gute Wischbewegung der Borsten entsteht, mit der abgelöstes Plaque besonders vorteilhaft entfernt werden kann, und mit der auch weiteres Plaque von den Zahnflächen abgelöst werden kann.

Bei einer weiteren vorteilhaften Ausgestaltung der Erfindung ist die Hubbewegung des Borstenträgers etwa parallel zu den Borsten ausgerichtet. Werden die Borsten von dem Benutzer etwa senkrecht auf die Zahnflächen aufgesetzt, so hat dies zur Folge, daß die Stocherbewegung der Borsten ebenfalls etwa senkrecht auf die Zahnflächen einwirkt. Dies ermöglicht eine besonders gute und wirkungsvolle Stocherbewegung der Borsten. Das Ablösen von Plaque und damit die Reinigung der Zahnflächen wird dadurch weiter verbessert.

Bei einer vorteilhaften Ausgestaltung der Erfindung sind die Welle und/oder das mit dem Griffteil gekoppelte Bürstenteil Bestandteile einer Schwinge, die etwa quer zur Schwenkachse der Schwinge schwenkbar innerhalb des Griffteils gelagert ist. Bei einer Schwenkbewegung der Schwinge führt der am freien Ende des Bürstenteils angeordnete Borstenträger eine hin- und hergehende Hubbewegung aus. Durch die etwa quer zur Welle ausgerichtete Achse der Schwinge wird erreicht, daß die Hubbewegung des Borstenträgers ungefähr oder im wesentlichen die Richtung der Borsten aufweist. Des weiteren kann durch die Wahl des Abstands des Borstenträgers von der Achse der Schwinge erreicht werden, daß die Hubbewegung des Borstenträgers etwa parallel zu der Richtung der Borsten verläuft. Dies hat die erläuterte wirksame Stocherbewegung der Borsten und damit eine verbesserte Reinigung der Zahnflächen zur Folge. Die Ausgestaltung der Welle und des Bürstenteils als Bestandteile einer Schwinge stellt somit eine besonders zweckmäßige Möglichkeit dar, die Hubbewegung des Borstenträgers auf einfache und kostengünstige Art und Weise zu erreichen.

Bei einer vorteilhaften Weiterbildung der Erfindung ist der Elektromotor mit Mitteln zur Vibrationserzeugung gekoppelt, die auf einen dem Bürstenteil gegenüberliegenden Ausleger der Schwinge einwirken. Die Schwinge wird auf diese Weise in eine Vibration versetzt, also in eine sehr schnelle Schwenkbewegung der Schwinge um ihre Achse. Der Borstenträger am freien Ende des Bürtenteils führt dadurch eine sehr schnelle hin- und hergehende Hubbewegung aus. Wird der Borstenträger mit den Borsten von einem Benutzer auf die Zahnflächen aufgesetzt, so hat diese Hubbewegung des Borstenträgers die erläuterte Stocherbewegung der Borsten zur Folge, mit der Plaque von den Zahnflächen abgelöst wird. Mit Hilfe der Schwinge und der beschriebenen Vibrationserzeugung wird somit auf besonders einfache und zweckmäßige Weise die Stocherbewegung der Borsten erzeugt.

Bei einer vorteilhaften Ausgestaltung der Erfindung ist als Mittel zur Vibrationserzeugung ein Exzenter vorgesehen, der auf der Motorwelle des Elektromotors angeordnet ist, und an dem der Ausleger der Schwinge anliegt. Mit Hilfe des Exzenters der Motorwelle wird also die Vibration erzeugt, und durch das Anliegen des Ausleges an dem Exzenter wird die Vibration auf die Schwinge übertragen. Dies stellt eine äußerst einfache Möglichkeit dar, die Schwinge in Vibrationen zu versetzen und damit die Stocherbewegung der Borsten zu erzeugen. Es sind nur wenige zusätzliche Bauteile notwendig, die dazuhin noch besonders kostengünstig herzustellen sind. Des weiteren kann durch die Ausgestaltung des Exzenters in einfacher Weise die Art und die Stärke der Vibration beeinflußt werden.

Bei einer vorteilhaften Weiterbildung der Erfindung ist der Ausleger mit einem Gleitschuh oder einer Rolle versehen, an dem bzw. an der der der Exzenter anliegt. Auf diese Weise wird die Reibung des Exzenters an dem Ausleger verringert oder ganz vermieden. Die beschriebene Vibrationserzeugung ist somit verschleißfrei und damit für den täglichen Einsatz beonders geeignet.

Von Vorteil kann nach einer anderen Ausführungsform auch auf der Motorwelle eine Exzenterhülse oder dergleichen aufgesteckt sein, die ein Kugellager oder dergleichen trägt. Durch diese Maßnahmen wird eine einfache und herstellungstechnisch unaufwendige Realisierung eines Exzenters angegeben.

Bei einer weiteren vorteilhaften Weiterbildung der Erfindung ist als Exzenter ein Lager, insbesondere ein Kugellager mit einem exzentrischen Innenring vorgesehen, der auf der Motorwelle angeordnet ist. Der Ausleger der Schwinge liegt am Außenring des Kugellagers an. Durch die Verwendung des Kugellagers werden jegliche Reibungsverluste zwischen der Motorwelle und dem Ausleger vermieden. Die Vibrationserzeugung ist somit verschleißfrei. Durch die Ausgestaltung der Exzentrität des Innenrings kann die Art und die Stärke der Vibration in einfacher Weise beeinflußt werden. Dies stellt eine besonders stabile und haltbare Möglichkeit dar, die Schwinge in Vibrationen zu versetzen und die Stocherbewegung der Borsten zu erzeugen.

Des weiteren besteht die Möglichkeit, den Ausleger mit einer Rolle zu versehen, an der der Außenring des Kugellagers anliegt. Dadurch wird die Reibung weiter verringert. Darüberhinaus kann in diesem Fall der Außenring des Kugellagers ebenfalls exzentrisch ausgestaltet werden. Dies ergibt insgesamt die Überlagerung zweier exzentrischer Bewegungen, nämlich derjenigen des Innenrings und derjenigen des Außenrings des Kugellagers. Auf diese Weise kann die Vibration der Schwinge und damit die Stocherbewegung der Borsten weiter beeinflußt werden.

Bei einer vorteilhaften Ausgestaltung der Erfindung ist als Mittel zur Vibrationserzeugung eine exzentrische Rolle vorgesehen ist, die an dem Ausleger gelagert ist, und die an der Motorwelle anliegt. Bei dieser Ausgestaltung ist der Exzenter somit dem Ausleger zugeordnet. Die Motorwelle trägt insoweit kein Bauteil. Die exzentrische Rolle liegt nur an der Motorwelle an, so daß auf diese Weise die Vibration der Schwinge und damit die Stocherbewegung der Borsten erzeugt wird. Für diese Ausgestaltung sind nur wenige zusätzliche Bauteile erforderlich, wodurch eine einfache und kostengünstige Herstellung ermöglicht wird. Die Reibung zwischen der Motorwelle und der exzentrischen Rolle ist gering, so daß diese Ausgestaltung weitgehend verschleißfrei und damit alltagstauglich ist.

Bei einer vorteilhaften Ausgestaltung der Erfindung ist ein Federelement, insbesondere eine Biegefeder, Schraubendruckfeder oder dergleichen vorgesehen, mit der der Ausleger an den Exzenter der Motorwelle bzw. der Exzenter des Auslegers an die Motorwelle angedrückt wird. Mit Hilfe der Biegefeder wird somit gewährleistet, daß der Exzenter immer an dem Ausleger bzw. an der Motorwelle anliegt und damit die Vibration sicher erzeugt wird. Ebenfalls kann durch die Biegefeder beeinflußt werden, mit welcher Kraft der Exzenter an dem Ausleger bzw. an der Motorwelle anliegt. Damit kann erreicht werden, daß der Elektromotor nur geringfügig durch die Vibrationserzeugung abgebremst und damit belastet wird. Dabei ist es alternativ möglich, als Feder eine Blattfeder oder eine Schraubenfeder oder dergleichen zu verwenden.

Bei einer vorteilhaften Weiterbildung der Erfindung wird bei Überschreiten einer auf die Borsten des Borstenträgers einwirkenden Kraft der Ausleger von dem Exzenter der Motorwelle bzw. der Exzenter des Auslegers von der Motorwelle abgehoben. Durch eine entsprechende Auswahl der Federkraft der Feder kann die Kraft, mit der die Feder den Ausleger gegen den Exzenter bzw. den Exzenter gegen die Motorwelle drückt, eingestellt werden. Wird diese Kraft überschritten, so hebt der Ausleger von dem Exzenter bzw. der Exzenter von der Motorwelle ab. Dies hat zur Folge, daß die Schwinge nicht mehr in eine Vibration versetzt wird und damit der Borstenträger keine hin- und hergehende Hubbewegung mehr ausführt. Wie beschrieben stellt dies für einen Benutzer eine Schutz- und Signalfunktion hinsichtlich einer zu hohen Anpreßkraft der Borsten auf die Zahnflächen dar. Mit Hilfe der Feder wird somit die beschriebene Schutz- und Signalfunktion auf eine sehr einfache und kostengünstige, aber trotzdem sichere und wirksame Art und Weise erreicht.

Bei einer vorteilhaften Ausgestaltung der Erfindung weist die Schwinge ein dem Bürstenteil zugewandtes Rohr auf, in dem die Welle gelagert ist, wobei das Rohr elastisch aus dem Griffteil herausgeführt ist. Das Rohr mit der darin gelagerten Schwinge bilden ein freies Ende der Schwinge. Dieses Ende ist aus dem Griffteil herausgeführt. Auf den aus dem Griffteil herausragenden Teil des Rohrs kann das Bürstenteil aufgesteckt werden. Im eingeschalteten Betriebszustand wird, wie erläutert, die Schwinge in eine Vibration und der Borstenträger dadurch in eine hin- und hergehende Hubbewegung versetzt. Damit diese Hubbewegung durch das Herausführen des Rohrs aus dem Griffteil nicht verhindert wird, ist eine elastische Verbindung zwischen dem Rohr und dem Griffteil vorgesehen. Dadurch kann sich die Vibration der Schwinge ungehindert fortpflanzen und der Borstenträger ungehindert seine hin- und hergehende Hubbewegung ausführen. Durch das elastische Herausführen des Rohrs aus dem Griffteil wird somit die Funktionsfähigkeit der Hubbewegung in einfacher, aber wirksamer Weise erreicht. Des weiteren hat die elastische Verbindung den Vorteil, daß sie ein Eindringen von Schmutz und insbesondere von Wasser in das Innere der elektrischen Zahnbürste sicher verhindert.

Bei einer weiteren vorteilhaften Ausgestaltung der Erfindung sind die Motorwelle des Elektromotors und die ein Bestandteil der Schwinge bildende Welle über ein Gelenkviereck miteinander verbunden. Die Motorwelle des Elektromotors führt eine rotierende Drehbewegung aus. Mit Hilfe des Gelenkvierecks wird diese rotierende Drehbewegung der Motorwelle in eine alternierende Drehbewegung der die Schwinge bildenden Welle umgesetzt. Dies hat zur Folge, daß auch der mit dieser Welle gekoppelte Borstenträger eine alternierende Drehbewegung ausführt. Dieses Gelenkviereck stellt eine bewährte, einfache und kostengünstige Möglichkeit der beschriebenen Umsetzung dar. Ebenfalls hat das Gelenkviereck den Vorteil, daß die Vibrationsbewegung der Welle keinen Einfluß hat auf die alternierende Drehbewegung der Welle. So werden insbesondere die Schwenkbewegungen der Welle durch das Gelenkviereck kompensiert, so daß sie praktisch nicht mehr vorhanden sind und damit keinen negativen Einfluß haben auf die Motorwelle des Elektromotors. Die Kompensation der Schwenkbewegungen der Welle erfolgt dabei durch die Verbindungen der einzelnen Bauteile des Gelenkvierecks, insbesondere durch das Spiel der genannten Bauteile zueinander. Die Erzeugung der alternierenden Drehbewegung durch das Gelenkviereck ist somit unabhängig von der Erzeugung der Vibrationsbewegung.

Bei einer weiteren vorteilhaften Ausgestaltung der Erfindung ist ein Chassis vorgesehen, an dem die Schwinge gelagert ist, und das in dem Griffteil untergebracht ist. Es kann somit keine direkte Übertragung der durch die Schwinge erzeugten Vibration auf das Griffteil erfolgen. Dies ist für die Benutzung der elektrischen Zahnbürste angenehmer und stellt somit einen Vorteil im Hinblick auf den Benutzerkomfort dar. Des weiteren ist es möglich, bei der Herstellung der elektrischen Zahnbürste die Funktionsfähigkeit der Schwinge und damit der Vibrationserzeugung außerhalb des Griffteils in einfacher Weise zu testen. Reperaturen und/oder Korrekturen können ebenfalls in einfacher Weise außerhalb des Griffteils am Chassis und den daran gehaltenen Bauteilen ausgeführt werden. Dies stellt einen wesentlichen Vorteil im Hinblick auf die Kosten für die Herstellung und die Wartung der elektrischen Zahnbürste dar.

Bei einer vorteilhaften Weiterbildung der Erfindung ist der Elektromotor an dem Chassis gehalten. Wie beschrieben erleichtert dies die Herstellung, den Test und die Wartung der elektrischen Zahnbürste wesentlich und wirkt sich damit auf die Kosten vorteilhaft aus.

Bei einer weiteren vorteilhaften Weiterbildung ist das Chassis elastisch in dem Griffteil gehalten. Auf diese Weise wird eine elastische Lagerung des Chassis innerhalb des Griffteils erreicht. Es wird vermieden, daß die durch die Schwinge erzeugte Vibration von dem Chassis auf das Griffteil übertragen wird, so daß eine angenehme Bedienung und damit der Komfort für den Benutzer weiter erhöht wird.

Dabei hat es sich als vorteilhaft erwiesen, daß beispielsweise die Welle verschwenkbar bezüglich der Achse im Griffteil gelagert ist und mittels einer Ausgleichskupplung mit der Bürstenwelle verbunden ist. In diesem Fall wird lediglich die Schwinge in eine Schwenk- oder Hubbewegung oder dergleichen versetzt, während die Welle lediglich um ihre Längsachse drehbar gelagert ist.

Dabei hat es sich als vorteilhaft erwiesen, daß ein Kopplungsstück, insbesondere das Rohr des Griffteils verschwenkbar bezüglich der Schwenkachse im Griffteil gelagert ist.

Die Welle zum Antrieb des Borstenträgers um die Drehachse kann beispielsweise eine oszillierende oder kontinuierliche Drehbewegung um die Längsachse oder aber auch eine hin- und hergehende Hubbewegung in Richtung der Längsachse ausführen. Die Mittel zur Erzeugung der Schwenk- oder Hubbewegung des Borstenträgers sind aus konstruktiver Sicht praktisch unabhängig davon, in welcher Form der Borstenträger in die Drehbewegung gesetzt wird.

Weitere Merkmale, Vorteile und Anwendungsmöglichkeiten der Erfindung ergeben sich aus der nachfolgenden Beschreibung von Ausführungsbeispielen, die in der Zeichnung näher dagestellt sind. Dabei bilden alle beschriebenen und/oder dargestellten Merkmale für sich oder in beliebiger sinnvoller Kombination den Gegenstand der Erfindung unabhängig von ihrer Zusammenfassung in den Ansprüchen und deren Rückbeziehung.

In der Zeichnung zeigt:
- Figur 1: eine schematische Darstellung eines ersten Ausführungsbeispiels einer elektrischen Zahnbürste in einem Längsschnitt,
- Figur 2: eine schematische Darstellung der elektrischen Zahnbürste der Figur 1 in einem Querschnitt entlang der Ebene A - A der Figur 1,
- Figur 3: eine schematische Darstellung der elektrischen Zahnbürste der Figur 1 in einem Querschnitt entlang der Ebene B - B der Figur 1,
- Figur 4: eine schematische Darstellung eines zweiten Ausführungsbeispiels einer elektrischen Zahnbürste in einem Längsschnitt,
- Figur 5: eine schematische Darstellung eines dritten Ausführungsbeispiels einer elektrischen Zahnbürste in einem Längsschnitt.

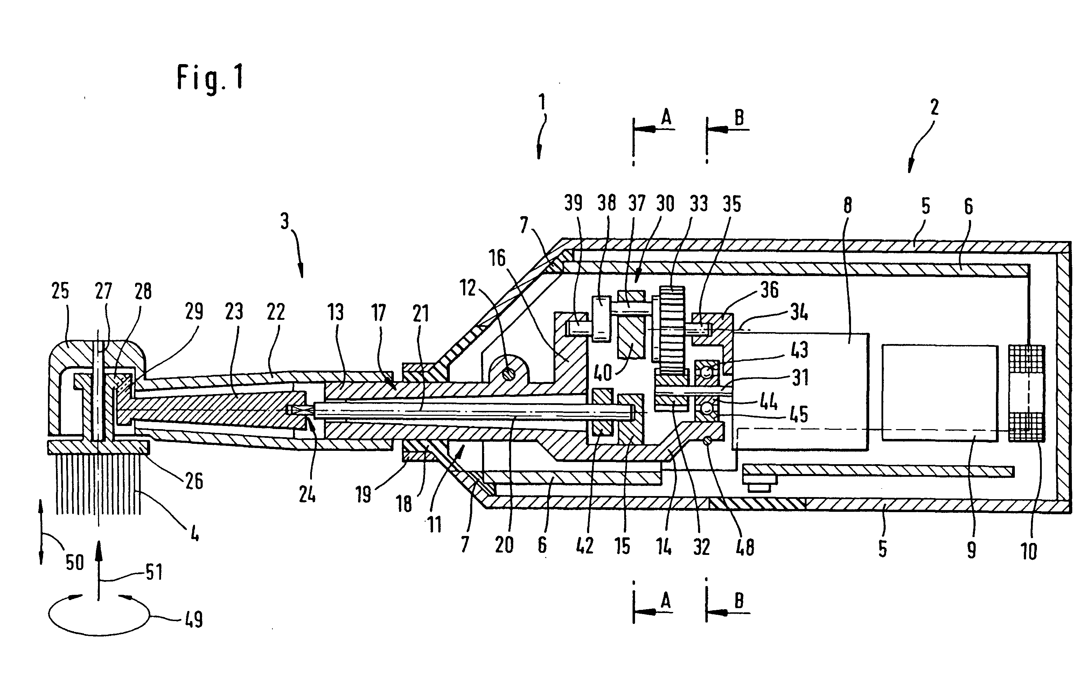

In den Figuren 1 bis 3 ist ein erstes Ausführungsbeispiel einer elektrischen Zahnbürste 1 dargestellt, die zur Reinigung der Zähne eines Benutzers, insbesondere zur Entfernung von Plaque von den Zahnflächen vorgesehen ist.

Die elektrische Zahnbürste weist ein Griffteil 2 auf, das eine etwa zylindrische, längliche Form besitzt. Auf das Griffteil 2 kann ein Bürstenteil 3 aufgesteckt werden, das eine ebenfalls etwa zylindrische, längliche Form aufweist. Der Durchmesser des Griffteils 2 ist derart gewählt, daß ein Benutzer die elektrische Zahnbürste 1 sicher an dem Griffteil 2 in die Hand nehmen kann. Der Durchmesser des Bürstenteils 3 ist kleiner als der Durchmesser des Griffteils 2, damit das Einführen des Bürstenteils 3 in den Mundraum leicht möglich ist.

Am freien Ende des Bürstenteils 3 stehen eine Vielzahl von Borsten 4 ab, mit denen der Benutzer die Reinigung der Zähne durchführen kann.

Das Griffteil 2 weist ein Gehäuse 5 auf, in dem ein Chassis 6 untergebracht ist. Das Chassis 6 besitzt eine längliche, teilweise zylindrische Form und erstreckt sich nahezu über die gesamte Länge des Gehäuses 5 und damit des Griffteils 2.

Das Chassis 6 ist an seinem dem Bürstenteil 3 zugewandten Ende durch Polster 7 aus Kunststoff oder Gummi oder dergleichen elastisch in dem Gehäuse 5 gehalten.

An dem Chassis 6 sind ein Elektromotor 8, ein Akkumulator 9 sowie weitere elektronische Bauteile, wie beispielsweise eine Ladespule 10 und dergleichen befestigt. Die genannten Bauteile sind vorzugsweise hintereinander in Längsrichtung des Griffteils 2 angeordnet. Des weiteren ist an dem Chassis 6 eine Schwinge 11 gelagert, die um eine Achse 12 schwenkbar ist. Die Schwinge 11 einschließlich der Achse 12 sind in dem dem Bürstenteil 3 zugewandten Bereich des Griffteils 2 angeordnet. Die Schwinge 11 ragt teilweise aus dem Griffteil 2 heraus.

Bestandteile der Schwinge 11 sind ein Rohr 13, ein Ausleger 14 sowie zwei Tragarme 15, 16. Das Rohr 13 der Schwinge 11 ist durch eine Öffnung 17 an dem dem Bürstenteil 3 zugewandten Ende des Griffteils 2 hindurchgesteckt und ragt aus dem Griffteil 2 heraus. Zwischen dem Rohr 13 und dem Gehäuse 5 des Griffteils 2 ist eine ringförmige Membran 18 aus Kunststoff oder Gummi oder dergleichen vorgesehen, mit der das Rohr 13 der Schwinge 11 elastisch aus dem Griffteil 2 herausgeführt ist. Zur Halterung und Befestigung des Rohrs 13 in dem Gehäuse 5 des Grifteils 2 ist eine Zwinge 19 vorgesehen, die ringförmig die Membran 18 umgibt.

Zumindest der aus dem Griffteil 2 herausragende Teil des Rohrs 13 besitzt eine Querschnittsform, deren Außendurchmesser eine Kontur aufweist. Auf diesen herausragenden Teil des Rohrs 13 kann das Bürstenteil 3 aufgesteckt werden. Das Bürstenteil 3 besitzt zumindest an seinem dem Griffteil 2 zugewandten Ende eine Querschnittsform mit einem Innendurchmesser, der eine Kontur aufweist, die der Kontur des Außendurchmessers des Rohrs 13 entspricht. Die einander zugeordneten Konturen sind dabei derart ausgebildet, daß das Bürstenteil 3 nur in einer einzigen Winkelstellung auf das Griffteil 2 aufgesteckt werden kann.

Beispielsweise kann die Kontur sternförmig oder dreiecksförmig oder dergleichen ausgebildet sein.

Ist das Bürstenteil 3 auf das Rohr 13 der Schwinge 11 aufgesteckt, so bildet das Bürstenteil 3 ein weiteres Bestandteil der Schwinge 11.

In dem Rohr 13 der Schwinge 11 ist eine Welle 20 untergebracht, die einerseits an dem aus dem Griffteil 2 herausragenden freien Ende des Rohrs 13 und andererseits in dem Tragarm 15 drehbar gelagert ist. Die Welle 20 erstreckt sich etwa in Längsrichtung des Griffteils 2 und des Bürstenteils 3 und legt eine Achse 21 fest. Die Welle 20 stellt ein weiteres Bestandteil der Schwinge 11 dar. Die Welle 20 ragt aus dem Rohr 13 heraus und besitzt dort an ihrem freien Ende eine Querschnittsform mit einem Außendurchmesser mit einer Kontur.

Die Achse 12 der Schwinge 11 und die Achse 21 der Welle 20 sind etwa quer zueinander angeordnet.

Auf das Rohr 13 der Schwinge 11 kann das Bürstenteil 3 aufgesteckt werden. Das Bürstenteil 3 weist ein Trägerrohr 22 auf, in dem eine Bürstenwelle 23 drehbar gelagert untergebracht ist. Die Bürstenwelle 23 ist bei aufgestecktem Bürstenteil 3 konzentrisch zur Achse 21 angeordnet und besitzt an ihrem dem Griffteil 2 zugewandten Ende eine Ausnehmung 24. Die Ausnehmung 24 besitzt einen Innendurchmesser mit einer Kontur, die der Kontur des Außendurchmessers der aus dem Rohr 13 herausragenden Welle 20 entspricht. Die einander zugeordneten Konturen sind dabei derart ausgebildet, daß die Welle 20 in mehreren Winkelstellungen in die Ausnehmung 24 eingesteckt werden kann. Beispielsweise kann die Kontur quadratisch sein.

An dem freien Ende des Trägerrohrs 22 und damit am freien Ende des Bürstenteils 3 ist eine Schale 25 gehalten, in der ein Borstenträger 26 untergebracht ist, an dem die Borsten 4 befestigt sind. Der Borstenträger 26 ist scheibenförmig ausgebildet und um eine Achse 27 drehbar gelagert. Die Achse 27 weist durch den Scheibenmittelpunkt des Borstenträgers 26 und die Borsten 4 stehen etwa parallel zu der Achse 27 vom Borstenträger 26 ab.

Die Achse 27 des Borstenträgers 26 ist etwa quer zu der Achse 21 der Welle 20 und ebenfalls etwa quer zu der Achse 12 der Schwinge 11 angeordnet.

Über zwei Kegelradsegmente 28, 29 kann eine alternierende Drehbewegung der Bürstenwelle 23 um die Achse 21 in eine alternierende Drehbewegung des Borstenträgers 26 um die Achse 27 umgesetzt werden.

Es wird darauf hingewiesen, daß die genannte Umsetzung der alternierenden Drehbewegung von der Bürstenwelle 23 auf den Borstenträger 26 auch auf andere Art und Weise erfolgen kann. So ist es beispielsweise möglich, daß diese Umsetzung entsprechend der bereits als Stand der Technik erwähnten internationalen Patentanmeldung WO 94/12121 A1 vorgenommen wird, insbesondere entsprechend den Figuren 1 und 7 dieser Druckschrift. Insoweit wird in dieser Anmeldung auf den Offenbarungsgehalt der WO 94/12121 A1 ausdrücklich Bezug genommen.

Zwischen der Schwinge 11 und dem Elektromotor 8 ist in dem Griffteil 2 ein Gelenkviereck 30 untergebracht. Hierzu weist der Elektromotor 8 eine Motorwelle 31 auf, die etwa parallel zu der Achse 21 der Welle 20 angeordnet ist und in Richtung der Schwinge 11 aus dem Elektromotor 8 herausragt. Auf der Motorwelle 31 ist ein Ritzel 32 drehfest aufgebracht, das ein Stirnrad 33 kämmt. Das Stirnrad 33 ist um eine Achse 34 drehbar gelagert, die etwa parallel zur Motorwelle 31 angeordnet ist. Hierzu steht von dem Stirnrad 33 ein zu der Achse 34 konzentrisch verlaufender Zapfen 35 ab, der in einem an dem Elektromotor 8 gehaltenen Tragarm 36 gelagert ist.

Auf der dem Zapfen 35 gegenüberliegenden Seite des Stirnrads 33 ist eine Antriebskurbel 37 an dem Stirnrad 33 befestigt, die etwa parallel, jedoch mit Abstand zur Achse 34 angeordnet ist. Diese Antriebskurbel 37 ist des weiteren über ein Verbindungsteil 38 und einen Zapfen 39 drehbar in dem Tragarm 16 der Schwinge 11 gelagert. Der Zapfen 39 ist dabei konzentrisch zu der Achse 34 angeordnet.

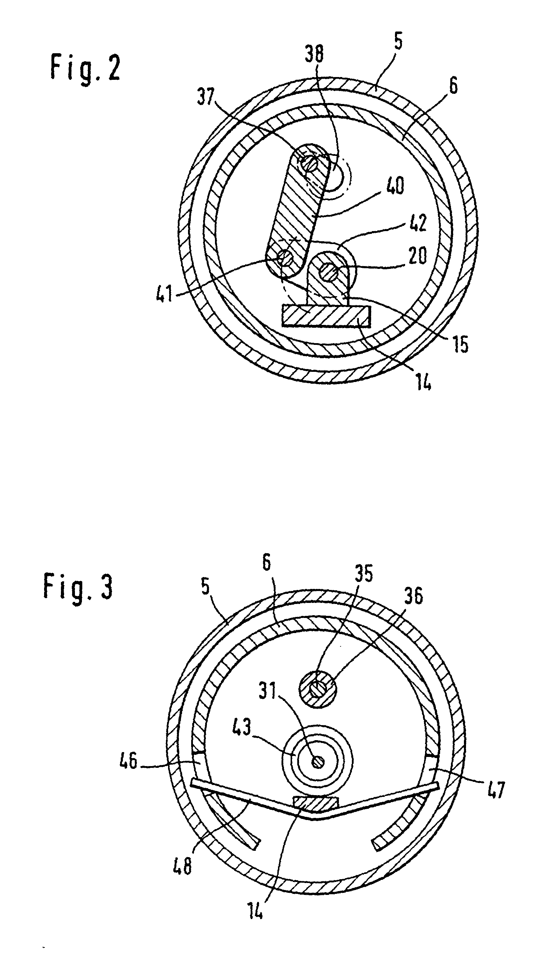

Auf der Antriebskurbel 37 ist ein Pleuel 40 drehbar gelagert. Wie insbesondere aus der Figur 2 ersichtlich ist, ist das Pleuel 40 mittels eines Stifts 41 mit einer Abtriebskurbel 42 schwenkbar verbunden. Die Abtriebskurbel 42 ist zwischen dem Rohr 13 und dem Tragarm 15 drehfest mit der Welle 20 der Schwinge 11 verbunden.

Auf der Motorwelle 31 des Elektromotors 8 ist ein Kugellager 43 angeordnet. Das Kugellager 43 besitzt einen exzentrischen Innenring 44 und einen konzentrischen Außenring 45. Mit dem exzentrischen Innenring 44 ist das Kugellager 43 auf die Motorwelle 31 aufgesteckt. Der exzentrische Innenring 44 wirkt somit als Exzenter. An dem konzentrischen Außenring 45 liegt das freie Ende des Auslegers 14 der Schwinge 11 an.

Wie insbesondere aus der Figur 3 ersichtlich ist, sind in dem Chassis 6 Öffnungen 46, 47 vorgesehen, in denen sich die freien Enden einer Biegefeder 48 abstützen. Die Biegefeder 48 ist derart angeordnet, daß sie am Ausleger 14 der Schwinge 11 anliegt und diesen gegen den Außenring 45 des Kugellagers 43 drückt. Die Kraft, mit der der Ausleger 14 von der Biegefeder 48 gegen das Kugellager 43 gedrückt wird, ist abhängig von der Federkonstanten der Biegefeder 48.

Im eingeschalteten Betriebszustand der elektrischen Zahnbürste 1 der Figuren 1 bis 3 führt die Motorwelle 31 des Elektromotors 8 eine rotierende Drehbewegung aus. Durch das Gelenkviereck 30 wird diese rotierende Drehbewegung in eine alternierende Drehbewegung der Welle 20 um die Achse 21 umgesetzt. Bei aufgestecktem Bürstenteil 3 wird diese alternierende Drehbewegung über die Kegelradsegmente 28, 29 auf den Borstenträger 26 übertragen, der somit ebenfalls eine alternierende Drehbewegung 49 um die Achse 27 ausführt.

Der Borstenträger 26 beschreibt eine alternierende Drehbewegung 49 mit einem Drehwinkelbereich, der insbesondere zwischen etwa ± 15 Grad und etwa ± 40 Grad liegen kann. Der Gesamtweg kann somit zwischen etwa 30 Grad und etwa 80 Grad liegen. Vorzugsweise beträgt der Drehwinkelbereich etwa ± 30 Grad und der Gesamtweg somit etwa 60 Grad. Jedoch sind auch Drehwinkel bis zu etwa ±90 Grad ohne weiteres möglich.

Die Frequenz der alternierenden Drehbewegung 49 des Borstenträgers 26 kann zwischen etwa 50 Hertz und etwa 80 Hertz liegen. Vorzugsweise beträgt die Frequenz etwa 63 Hertz.

Im eingeschalteten Betriebszustand der elektrischen Zahnbürste 1 der Figuren 1 bis 3 führt die Motorwelle 31 des Elektromotors 8, wie erwähnt, eine rotierende Drehbewegung aus. Aufgrund des exzentrischen Innenrings 44 wird das gesamte Kugellager 43 in eine Vibration versetzt. Der exzentrische Innenring 44 dient somit der Vibrationserzeugung. Durch den von der Biegefeder 48 an den Außenring 45 des Kugellagers 43 angedrückten Ausleger 14 wird diese Vibration auf die Schwinge 11 übertragen. Dies hat zur Folge, daß die Schwinge 11 in eine vibrierende Schwenkbewegung um die Achse 12 versetzt wird.

Wie erläutert wurde, stellt das aufgesteckte Bürstenteil 3 ein Bestandteil der Schwinge 11 dar. Dies hat zur Folge, daß auch das Bürstenteil 3 mit dem Borstenträger 26 in eine vibrierende Schwenkbewegung um die Achse 12 versetzt wird. Durch die Ausrichtung der Achse 12 etwa quer zu der Achse 27 führt der Borstenträger 26 eine hin- und hergehende Hubbewegung 50 aus, deren Richtung etwa parallel zur Achse 27 verläuft. Die etwa parallele Anordnung der Borsten 4 und der Achse 27 bewirkt schließlich, daß die Borsten 4 eine Stocherbewegung in ihrer Borstentrichtung ausführen.

Der Weg der hin- und hergehenden Hubbewegung 50 des Borstenträgers 26 und damit der Stocherbewegung der Borsten 4 kann in einem Bereich von etwa ± 0,02 mm bis etwa ± 0,2 mm liegen. Der Gesamtweg kann somit zwischen etwa 0,04 mm und etwa 0,4 mm liegen. Vorzugsweise beträgt der Weg der Hubbewegung 50 etwa ± 0,05 mm und somit der Gesamtweg etwa 0,1 mm.

Die Frequenz der hin- und hergehenden Hubbewegung 50 des Borstenträgers 26 und damit der Stocherbewegung der Borsten 4 kann zwischen etwa 130 Hertz und etwa 200 Hertz liegen. Vorzugsweise beträgt die Frequenz etwa 164 Hertz.

Die Frequenz der hin- und hergehenden Hubbewegung 50 ist somit größer, vorzugsweise wesentlich größer als die Frequenz der alternierenden Drehbewegung 49.

Die Drehbewegung 49 und die Hubbewegung 50 des Borstenträgers 26 werden beide von dem Elektromotor 8 erzeugt. Die Frequenz der hin- und hergehenden Hubbewegung 50 des Borstenträgers 26 entspricht unmittelbar der Drehzahl des Elektromotors 8. Die Frequenz der alternierenden Drehbewegung 49 des Borstenträgers 26 ist jedoch über das Gelenkviereck 30 von der Drehzahl des Elektromotrs 8 abhängig. Das Verhältnis der Frequenz der alternierenden Drehbewegung 49 und der hin- und hergehenden Hubbewegung 50 ist somit ein endlicher Wert oder ein periodischer Bruch oder ein nicht-periodischer Bruch ist.

Wird die elektrische Zahnbürste 1 der Figuren 1 bis 3 im eingeschalteten Betriebszustand von einem Benutzer zur Reinigung der Zähne verwendet, so legt der Benutzer die Borsten 4 auf den Zahnflächen auf. Dies hat zur Folge, daß eine Kraft auf die Borsten 4 einwirkt, die in der Figur 1 mit dem Bezugszeichen 51 gekennzeichnet ist.

Wie erläutert, wird der Ausleger 14 der Schwinge 11 mittels der Biegefeder 48 gegen den Außenring 45 des Kugellagers 43 gedrückt. Des weiteren drückt der Ausleger 14 auf derjenigen Seite gegen das Kugellager 43, auf der auch der Borstenträger 16 angeordnet ist. Übt nun der Benutzer eine Kraft 51 auf die Borsten 4 des Borstenträgers 26 aus, die einen bestimmten Wert überschreitet, so hat dies zur Folge, daß der Ausleger 14 der Schwinge 11 gegen die Federkraft der Biegefeder 48 von dem Außenring 45 des Kugellagers 43 abgehoben wird. Damit wird die von dem Kugellager 43 erzeugte Vibration nicht mehr auf die Schwinge 11 und damit auch nicht mehr auf den Borstenträger 26 und die Borsten 4 übertragen. Übersteigt also die Kraft 51 den bestimmten Wert, dann wird durch das Abheben des Auslegers 14 von dem Kugellager 43 die hin- und hergehende Hubbewegung 50 des Borstenträgers und damit die Stocherbewegung der Borsten 4 abgeschaltet.

Der bestimmte Wert der Kraft 51, bei dem der Ausleger 14 von dem Kugellager 43 abgehoben wird, kann durch die Wahl der Federkonstante der Biegefeder 48 vorgegeben werden. Je größer die Federkonstante ist, desto stärker wird der Ausleger 14 durch die Biegefeder 48 an das Kugellager 43 angedrückt, und desto größer ist der bestimmte Wert der Kraft 51, die erforderlich ist, damit der Ausleger 14 von dem Kugellager 43 abgehoben wird.

Der bestimmte Wert der Kraft 51 kann in einem Bereich von etwa 1,5 Newton bis etwa 4,0 Newton liegen. Vorzugsweise liegt der bestimmte Wert der Kraft 51 etwa bei 2,0 Newton.

Es besteht zusätzlich oder alternativ die Möglichkeit, mechanische Mittel vorzusehen, mit denen der Ausleger 14 der Schwinge 11 von dem Außenring 45 des Kugellagers 43 abgehoben werden kann. Diese Mittel erlauben das Abschalten der hin- und hergehenden Hubbewegung 50 des Borstenträgers 26 und damit der Stocherbewegung der Borsten 4 unabhängig von der Kraft 51, mit der die Borsten 4 von dem Benutzer gegen die Zahnflächen gedrückt werden. Als Mittel kann beipielsweise ein Hebel vorgesehen sein, der von dem Benutzer betätigbar ist, und mit dem der Ausleger 14 von dem Kugellager 43 abgehoben werden kann. Der Benutzer hat damit die Möglichkeit, die hin- und hergehende Hubbewegung des Borstenträgers 26 nach Belieben ein- und auszuschalten.

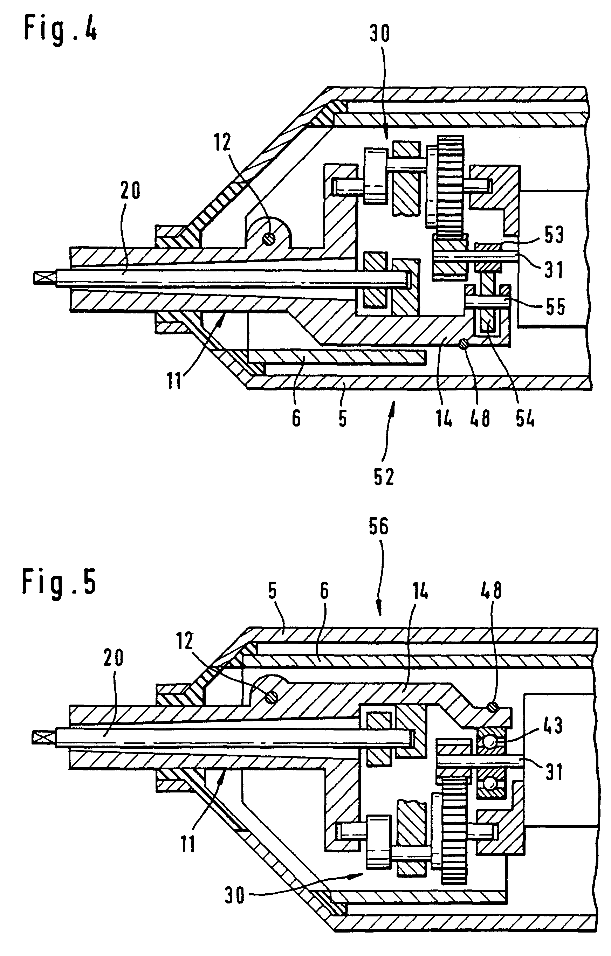

In der Figur 4 ist ein zweites Ausführungsbeispiel einer elektrischen Zahnbürste 52 dargestellt, die hinsichtlich ihres Aufbaus und ihrer Funktion weitgehend der elektrischen Zahnbürste 1 der Figuren 1 bis 3 entspricht. Unterschiede bestehen nur im Zusammenhang mit der Erzeugung der Vibration der Schwinge 11, die bei der elektrischen Zahnbürste der Figur 4 nicht mit Hilfe eines Kugellagers mit exzentrischem Innenring durchgeführt wird. Nachfolgend werden deshalb auch nur diejenigen Bauteile beschrieben, die von der elektrischen Zahnbürste 1 der Figuren 1 bis 3 abweichen. Gleiche Bauteile sind mit gleichen Bezugszeichen gekennzeichnet.

Bei der elektrischen Zahnbürste 52 der Figur 4 ist zur Vibrationserzeugung ein Exzenter 53 auf die Motorwelle 31 des Elektromotors 8 drehfest aufgebracht. Der Exzenter kann beispielsweise aus einem Rad oder dergleichen gebildet werden, das entweder exzentrisch gelagert ist oder einen exzentrischen Außendurchmesser aufweist. An dem freien Ende des Auslegers 14 der Schwinge 11 ist eine Rolle 54 drehbar um eine etwa parallel zur Motorwelle 31 ausgerichtete Achse 55 gelagert. Die Rolle 54 liegt an dem Exzenter 53 an und rollt bei einer roterenden Drehbewegung der Motorwelle 31 mit ihrem Umfang an dem Umfang des Exzenters 53 entlang. Dies hat zur Folge, daß im eingeschalteten Betriebszustand der elektrischen Zahnbürste 52 die Schwinge 11 durch den Exzenter 53 und die daran abrollende Rolle 54 in eine Vibration versetzt wird. Diese Vibration wird, wie erläutert, auf den Borstenträger 26 übertragen und erzeugt die hin- und hergehende Hubbewegung 50.

Es besteht alternativ die Möglichkeit, daß anstelle der Rolle 54 ein Gleitschuh vorgesehen ist, der am Umfang des Exzenters 53 entlanggleitet.

Eine weitere alternative Möglichkeit besteht darin, daß das Kugellager 43 entsprechend den Figuren 1 bis 3 vorgesehen ist, und daß die Rolle 54 entsprechend der Figur 4 an dem Außenring 45 des Kugellagers 43 anliegt und an dessen Umfang entlangrollt.

Eine weitere zusätzliche oder alternative Möglichkeit besteht darin, daß der Außenring 45 des Kugellagers 43 nicht konzentrisch wie in den Figuren 1 bis 3, sondern exzentrisch ausgestaltet ist. Insbesondere in Verbindung mit der Rolle 54 wird dadurch eine Vibration erzeugt, die sich aus einer Vibration aufgrund des exzentrischen Innenrings 44 und einer Vibration aufgrund des exzentrischen Außenrings 45 zusammensetzt.

Eine weitere alternative Möglichkeit besteht darin, daß anstelle der an dem Ausleger 14 gelagerten Rolle 54 der Figur 4 ein exzentrisches Rad vorgesehen ist. Dies kann dadurch erreicht werden, daß das Rad eine exzentrische Lagerung oder einen exzentrischen Außendurchmesser aufweist. Auf der Motorwelle 31 des Elektromotors 8 muß in diesem Fall dem Rad kein weiteres Bauteil zugeordnet sein. Das exzentrische Rad liegt direkt an der Motorwelle 31 an und läuft auf dieser ab, wenn die Motorwelle 31 eine rotierende Drehbewegung ausführt. Aufgrund der Exzentrität des Rads wird die Schwinge 11 in eine Vibration versetzt, was zu der hin- und hergehenden Hubbewegung 50 des Borstenträgers 26 und damit der Stocherbewegung der Borsten 4 führt.

In der Figur 5 ist ein drittes Ausführungsbeispiel einer elektrischen Zahnbürste 56 dargestellt, die hinsichtlich ihres Aufbaus und ihrer Funktion weitgehend der elektrischen Zahnbürste 1 der Figuren 1 bis 3 entspricht. Unterschiede bestehen nur im Zusammenhang mit der Anordnung des Ausleges 14 der Schwinge 11, der bei der elektrischen Zahnbürste der Figur 5 nicht auf derselben Seite wie der Borstenträger 26 vorgesehen ist. Nachfolgend werden deshalb auch nur diejenigen Bauteile beschrieben, die von der elektrischen Zahnbürste 1 der Figuren 1 bis 3 abweichen. Gleiche Bauteile sind mit gleichen Bezugszeichen gekennzeichnet.

Bei der elektrischen Zahnbürste 56 der Figur 5 drückt der Ausleger 14 der Schwinge 11 auf derjenigen Seite gegen den Außenring 45 des Kugellagers 43, die dem Borstenträger 26 gegenüber liegt. Dies hat zur Folge, daß der Ausleger 14 immer von der Biegefeder 48 gegen das Kugellager 43 gedrückt wird. Auch durch die auf die Borsten 4 einwirkende Kraft 51 wird der Ausleger 14 nicht von dem Kugellager 43 abgehoben. Die Biegefeder 48 dient in diesem Fall nur zur Vorspannung. Die hin- und hergehende Hubbewegung 50 des Borstenträgers 26 und damit die Stocherbewegung der Borsten 4 bleibt somit unabhängig von der Kraft 51 erhalten.

Aus räumlichen Gründen ist bei der elektrischen Zahnbürste 56 der Figur 5 das Gelenkviereck 30 im Vergleich zu der elektrischen Zahnbürste 1 der Figuren 1 bis 3 auf der anderen Seite der Schwinge 11 angeordnet.

Eine weitere alternative Möglichkeit besteht darin, daß die Vibrationserzeugung und damit die hin- und hergehende Hubbewegung 50 des Borstenträgers 26 nicht mit Hilfe des Elektromotors 8 erfolgt, wie dies in den Figuren 1 bis 5 vorgesehen ist, sondern durch davon unabhängige Antriebsmittel. Dies hat zur Folge, daß die Frequenz der hin- und hergehenden Hubbewegung 50 des Borstenträgers 26 und damit die Frequenz der Stocherbewegung der Borsten 4 unabhängig ist von der Frequenz der alternierenden Drehbewegung 49 des Borstenträgers 26. Als unabhängige Antriebsmittel für die Hubbewegung 50 kann beispielsweise ein weiterer Elektromotor oder ein elektromagnetischer Schwinger oder ein piezoelektrischer Aktuator vorgesehen sein.

## Patentansprüche

1. Elektrische Zahnbürste (1) mit einem Griffteil (2), in dem ein Elektromotor (8) untergebracht ist und mit einer Welle (20), die mit dem Elektromotor (8) in Antriebsverbindung steht und mit der ein Bürstenteil (3) mit um eine Achse (27) drehbeweglichem Borstenträger (26) zur Erzeugung einer oszillierenden oder kontinuierlichen Drehbewegung (49) des Borstenträgers (26) koppelbar ist, **dadurch gekennzeichnet, daß** das mit dem Griffteil (2) gekoppelte Bürstenteil (3) eine oszillierende Schwenk- oder Hubbewegung (50) mit einer Bewegungsrichtung ausführt, die im wesentlichen parallel zur Achse (27) ausgerichtet ist.

2. Elektrische Zahnbürste nach Anspruch 1, **dadurch gekennzeichnet, daß** das Bürstenteil eine Schwenk- oder Hubbewegung (50) um eine Achse (12) ausführt, die im wesentlichen quer zur in Längsrichtung der Welle (20) verlaufenden Achse (21) angeordnet ist.

3. Elektrische Zahnbürste nach Anspruch 2 , **dadurch gekennzeichnet, daß** die Achse (12) im Griffteil (2) angeordnet ist.

4. Elektrische Zahnbürste (1) nach einem der vorhergehenden Ansprüche,
**dadurch gekennzeichnet, daß** die Frequenz der Schwenk- oder Hubbewegung (50) einen größeren Wert, bevorzugt etwa den zwei- bis dreifachen Wert der Frequenz der Drehbewegung (49) aufweist.

5. Elektrische Zahnbürste (1) nach einem der vorhergehenden Ansprüche,
**dadurch gekennzeichnet, daß** die Bewegungsrichtung der Drehbewegung (49) und die Bewegungsrichtung der Schwenk- oder Hubbewegung (50) im wesentlichen rechtwinklig zueinander ausgerichtet sind.

6. Elektrische Zahnbürste (1) nach einem der vorhergehenden Ansprüche,
**dadurch gekennzeichnet, daß** die Amplitude der Schwenk- oder Hubbewegung (50) im Bereich zwischen ± 0,02 mm und ± 0,2 mm, bevorzugt bei etwa ± 0,05 mm liegt.

7. Elektrische Zahnbürste (1) nach einem der vorhergehenden Patentansprüche, **dadurch gekennzeichnet, daß** die Frequenz der Drehbewegung (49) etwa 60 bis 70 Hz, bevorzugt etwa 65 Hz, und die Frequenz der Schwenk- oder Hubbewegung (50) etwa 120 bis 210 Hz, bevorzugt etwa 165 Hz, beträgt.

8. Elektrische Zahnbürste (1) nach einem der vorhergehenden Patentansprüche, **dadurch gekennzeichnet, daß** die Frequenz der Drehbewegung (49) und Schwenk- oder Hubbewegung (50) **insoweit** aufeinander abgestimmt sind, daß eine gleiche Phasenlage der überlagerten Schwingung erst wieder nach einer Mehrzahl von Schwingungszyklen, insbesondere nach mehr als vier Schwingungszyklen, auftritt.

9. Elektrische Zahnbürste (1) nach einem der vorhergehenden Patentansprüche, **dadurch gekennzeichnet, daß** das Verhältnis der Frequenzen der Drehbewegung (49) und der Hubbewegung (50) ein endlicher Wert oder ein periodischer Bruch oder ein nicht-periodischer Bruch ist.

10. Elektrische Zahnbürste (1) nach einem der vorhergehenden Patentansprüche, **dadurch gekennzeichnet, daß** die Frequenzen der Drehbewegung (49) und der Hubbewegung (50) unabhängig voneinander sind.

11. Elektrische Zahnbürste (1) nach einem der vorhergehenden Patentansprüche, **dadurch gekennzeichnet, daß** die Drehbewegung (49) und die Hubbewegung (50) des Borstenträgers (26) **mittelbar oder unmittelbar** von dem Elektromotor (8) erzeugt werden.

12. Elektrische Zahnbürste (1) nach einem der vorhergehenden Patentansprüche 1 bis 10, **dadurch gekennzeichnet, daß** die Drehbewegung (49) von dem Elektromotor (8) und die Hubbewegung (50) von davon unabhängigen Antriebsmitteln erzeugt werden.

13. Elektrische Zahnbürste (1) nach einem der vorhergehenden Patentansprüche, **dadurch gekennzeichnet, daß** die Hubbewegung (50) von einem weiteren Elektromotor oder von einem elektromagnetischen Schwinger oder von einem piezoelektrischen Aktuator erzeugt wird.

14. Elektrische Zahnbürste (1) nach einem der vorhergehenden Patentansprüche, **dadurch gekennzeichnet, daß** die Hubbewegung (50) des Borstenträgers (26) bei Überschreiten einer bestimmten, auf die Borsten (4) einwirkenden Kraft (51) selbsttätig zum Stillstand kommt.

15. Elektrische Zahnbürste (1) nach Anspruch 14, **dadurch gekennzeichnet, daß** Mittel vorgesehen sind, mit denen die Kraft (51) von einem Benutzer individuell eingestellt werden kann.

16. Elektrische Zahnbürste (1) nach einem der vorhergehenden Patentansprüche, **dadurch gekennzeichnet, daß** die Hubbewegung (50) durch einen Benutzer abschaltbar ist.

17. Elektrische Zahnbürste (1) nach einem der vorhergehenden Patentansprüche, **dadurch gekennzeichnet, daß** die Drehbewegung (49) oszillierend ist und um eine etwa parallel zu den Borsten (4) des Borstenträgers (26) ausgerichtete Achse (27) erfolgt.

18. Elektrische Zahnbürste (1) nach einem der vorhergehenden Patentansprüche, **dadurch gekennzeichnet, daß** die Hubbewegung (50) des Borstenträgers (26) etwa parallel zu den Borsten (4) ausgerichtet ist.

19. Elektrische Zahnbürste (1) nach einem der vorhergehenden Patentansprüche, **dadurch gekennzeichnet, daß** die Welle (20) und/oder das mit dem Griffteil (2) gekoppelte Bürstenteil (3) Bestandteile einer Schwinge (11) sind, die etwa quer zur Achse (21), insbesondere um die Achse (12), schwenkbar innerhalb des Griffteils (2) gelagert ist.

20. Elektrische Zahnbürste (1) nach Anspruch 19, **dadurch gekennzeichnet, daß** der Elektromotor (8) mit Mitteln zur Vibrations- bzw. Oszillationserzeugung gekoppelt ist, die auf einen dem Bürstenteil (2) gegenüberliegenden Ausleger (14) der Schwinge (11) einwirken.

21. Elektrische Zahnbürste (1, 52) nach Anspruch 20, **dadurch gekennzeichnet, daß** als Mittel zur Vibrations- bzw. Oszillationserzeugung ein Exzenter (53) vorgesehen ist, der auf der Motorwelle (31) des Elektromotors (8) angeordnet ist, und an dem der Ausleger (14) der Schwinge (11) anliegt.

22. Elektrische Zahnbürste (1, 52) nach Anspruch 21, **dadurch gekennzeichnet, daß** der Ausleger (14) mit einem Gleitschuh oder einer Rolle (54) versehen ist, an dem bzw. an der der Exzenter (53) anliegt.

23. Elektrische Zahnbürste (1) nach einem der vorhergehenden Patentansprüche 21 oder 22, **dadurch gekennzeichnet, daß** als Exzenter (53) eine Walze mit zwei oder mehr Nocken vorgesehen ist, an denen der Ausleger (14) mittels einer Rolle (54) oder eines Gleitschuhs anliegt.

24. Elektrische Zahnbürste (1) nach einem der vorhergehenden Patentansprüche, **dadurch gekennzeichnet, daß** auf der Motorwelle (31) eine Exzenterhülse aufgesteckt ist, die ein Kugellager (43) oder dergleichen trägt.

25. Elektrische Zahnbürste (1) nach einem der vorhergehenden Patentansprüche, **dadurch gekennzeichnet, daß** als Exzenter (53) ein Wälzlager, insbesondere ein Kugellager (43) mit einem exzentrischen Innenring (44) vorgesehen ist, der auf der Motorwelle (31) angeordnet ist.

26. Elektrische Zahnbürste (1) nach einem der vorhergehenden Patentansprüche 20 bis 25, **dadurch gekennzeichnet, daß** ein Federelement, insbesondere eine Biegefeder (48), Schraubendruckfeder oder dergleichen, vorgesehen ist, mit der der Ausleger (14) der Schwinge (11) in Richtung der Motorwelle (31), insbesondere an einen Exzenter (53) der Motorwelle (31) angedrückt wird.

27. Elektrische Zahnbürste (1) nach einem der Anspüche 21-26, **dadurch gekennzeichnet, daß** bei Überschreiten einer auf die Borsten (4) des Borstenträgers (26) einwirkenden Kraft (51) der Ausleger (14) von dem Exzenter (53) der Motorwelle (31) abgehoben wird.

28. Elektrische Zahnbürste (1) nach einem der vorhergehenden Patentansprüche 19-27, **dadurch gekennzeichnet, daß** die Schwinge (11) ein sich in Richtung des Bürstenteils (3) erstreckendes Rohr (13) aufweist, in dem die Welle (20) angeordnet ist, wobei das Rohr (13) durch ein elastisches Mittel, insbesondere eine elastische Membran (18), einen elastischen Balg oder dergleichen aus dem Griffteil (2) herausgeführt ist.

29. Elektrische Zahnbürste (1) nach einem der vorhergehenden Patentansprüche 19-28, **dadurch gekennzeichnet, daß** die Motorwelle (31) des Elektromotors (8) und die insbesondere ein Bestandteil der Schwinge (11) bildende Welle (20) über ein Gelenkviereck (30) miteinander verbunden sind.

30. Elektrische Zahnbürste (1) nach einem der vorhergehenden Patentansprüche, **dadurch gekennzeichnet, daß** ein Chassis (6) vorgesehen ist, an dem eine Schwinge (11) gelagert ist, und das in dem Griffteil (2) untergebracht ist.

31. Elektrische Zahnbürste (1) nach Anspruch 30, **dadurch gekennzeichnet, daß** der Elektromotor (8) an dem Chassis (6) gehalten ist.

32. Elektrische Zahnbürste (1) nach einem der vorhergehenden Patentansprüche 30 oder 31, **dadurch gekennzeichnet, daß** das Chassis (6) elastisch in dem Griffteil (2) gehalten ist.

33. Elektrische Zahnbürste nach einem der vorhergehenden Ansprüche, **dadurch gekennzeichnet, daß** die Welle (20) unverschwenkbar bezüglich der Achse (12) im Griffteil (2) gelagert ist und mittels einer Ausgleichskupplung mit der Bürstenwelle (23) verbunden ist.

34. Elektrische Zahnbürste nach einem der vorhergehenden Ansprüche, **dadurch gekennzeichnet, daß** ein Kopplungsstück, insbesondere ein Rohr (13) des Griffteils (2), verschwenkbar bezüglich der Achse (12) im Griffteil (2) gelagert ist.

35. Elektrische Zahnbürste nach einem der vorhergehenden Ansprüche 2-34, **dadurch gekennzeichnet, daß** die Welle (20) in eine oszillierende oder kontinuierliche Drehbewegung um die Achse (21) oder in hin- und hergehende Hubbewegungen in Richtung der Achse (21) versetzbar ist.

## Claims

1. An electric toothbrush (1) with a handle (2) which houses an electric motor (8), and with a shaft (20) that is connected to and driven by said electric motor (8) and can be coupled to a brush attachment (3) provided with a bristle head (26) which is rotary about an axis (27) for generating an oscillating or continuous rotary movement (49) of the bristle head (26), **characterized in that** the brush attachment (3) coupled to the handle (2) performs an oscillatory swivel or stroke movement (50) in a direction which is essentially parallel to said axis (27).

2. The electric toothbrush as claimed in claim 1, **characterized in that** the brush attachment performs a swivel or stroke movement (50) around an axis (12) which extends in a direction essentially perpendicular to the axis (21) that extends in the longitudinal direction of the shaft (20).

3. The electric toothbrush as claimed in claim 2, **characterized in that** the axis (12) is arranged in said handle (2).

4. The electric toothbrush (1) as claimed in any one of the preceding claims, **characterized in that** the frequency of the swivel or stroke movement (50) is higher, preferably by a factor of about two to three, than the frequency of the rotary movement (49).

5. The electric toothbrush (1) as claimed in any one of the preceding claims, **characterized in that** the direction of movement of the rotary movement (49) and the direction of movement of the swivel or stroke movement (50) are oriented at substantially right angles to each other.

6. The electric toothbrush (1) as claimed in any one of the preceding claims, **characterized in that** the amplitude of the swivel or stroke movement (50) is in the range of between ±0.02 mm and ±0.2 mm, and is preferably about ±0.05 mm.

7. The electric toothbrush (1) as claimed in any one of the preceding patent claims, **characterized in that** the frequency of the rotary movement (49) is about 60 to 70 Hz, and preferably about 65 Hz, and the frequency of the swivel or stroke movement (50) is about 120 to 210 Hz, and is preferably about 165 Hz.

8. The electric toothbrush (1) as claimed in any one of the preceding patent claims, **characterized in that** the frequencies of the rotary movement (49) and the swivel or stroke movement (50) are selected in relation to each other **to the extent** that phase coincidence of the heterodyne oscillation does not occur until after a plurality of oscillatory cycles, and in particular after more than four such cycles.

9. The electric toothbrush (1) as claimed in any one of the preceding patent claims, **characterized in that** the ratio of the frequencies of the rotary movement (49) and the stroke movement (50) is a finite value, or a periodic fraction, or a non-periodic fraction.

10. The electric toothbrush (1) as claimed in any one of the preceding patent claims, **characterized in that** the frequencies of the rotary movement (49) and the stroke movement (50) are independent of each other.

11. The electric toothbrush (1) as claimed in any one of the preceding patent claims, **characterized in that** the rotary movement (49) and the stroke movement (50) of the bristle head (26) are generated **directly or indirectly** by the electric motor (8).

12. The electric toothbrush (1) as claimed in any one of the preceding patent claims 1 to 10, **characterized in that** the rotary movement (49) is generated by the electric motor (8), while the stroke movement (50) is independently generated by other drive provisions.

13. The electric toothbrush (1) as claimed in any one of the preceding patent claims, **characterized in that** the stroke movement (50) is generated by an additional electric motor, or an electromagnetic oscillator, or a piezoelectric actuator.

14. The electric toothbrush (1) as claimed in any one of the preceding patent claims, **characterized in that** the stroke movement (50) of the bristle head (26) automatically comes to a stop when the force (51) acting on the bristles (4) exceeds a certain level.

15. The electric toothbrush (1) as claimed in claim 14, **characterized in that** devices are provided which enable a user to select the individual setting of the force level (51).

16. The electric toothbrush (1) as claimed in any one of the preceding patent claims, **characterized in that** the stroke movement (50) can be switched off by the user.

17. The electric toothbrush (1) as claimed in any one of the preceding patent claims, **characterized in that** the rotary movement (49) is an oscillating motion that occurs around an axis (27) the orientation of which is approximately parallel with the bristles (4) of the bristle head (26).

18. The electric toothbrush (1) as claimed in any one of the preceding patent claims, **characterized in that** the stroke movement (50) of the bristle head (26) is approximately parallel with the bristles (4).

19. The electric toothbrush (1) as claimed in any one of the preceding patent claims, **characterized in that** the shaft (20) and/or the brush attachment (3) coupled to the handle (2) are integral parts of a rocker arm (11) which is swivel-mounted inside the handle (2) at an angle roughly perpendicular to the axis (21), in particular about the axis (12).

20. The electric toothbrush (1) as claimed in claim 19, **characterized in that** the electric motor (8) is coupled to devices for generating vibrations or oscillations, said devices acting on a cantilever (14) of the rocker arm (11) opposite the brush attachment (2).

21. The electric toothbrush (1, 52) as claimed in claim 20, **characterized in that** the device provided for generating vibrations or oscillations is an eccentric element (53) mounted on the motor shaft (31) of the electric motor (8) and bearing on the cantilever (14) of the rocker arm (11).

22. The electric toothbrush (1, 52) as claimed in claim 21, **characterized in that** the cantilever (14) is provided with a sliding shoe or a roller (54) on which bears said eccentric element (53).

23. The electric toothbrush (1) as claimed in any one of the preceding patent claims 21 or 22, **characterized in that** said eccentric element (53) is provided in the form of a cylinder with one or more cams on which bears the cantilever (14) by means of a roller (54) or a sliding shoe.

24. The electric toothbrush (1) as claimed in any one of the preceding patent claims, **characterized in that** an eccentric sleeve carrying a ball bearing (43) or the like is mounted on the motor shaft (31).

25. The electric toothbrush (1) as claimed in any one of the preceding patent claims, **characterized in that** said eccentric element (53) is provided in the form of an anti-friction bearing, in particular a ball bearing (43) having an eccentric inner race (44) mounted on the motor shaft (31).

26. The electric toothbrush (1) as claimed in any one of the preceding patent claims 20 to 25, **characterized in that** a spring element is provided, in particular a bending spring (48), a helical compression spring or the like, by means of which the cantilever (14) of the rocker arm (11) is urged in the direction of the motor shaft (31), in particular against an eccentric element (53) of the motor shaft (31).

27. The electric toothbrush (1) as claimed in any one of the patent claims 21 to 26, **characterized in that** the cantilever (14) is lifted off the eccentric element (53) on the motor shaft (31) when a force (51) applied to the bristles (4) of the bristle head (26) exceeds a certain level.

28. The electric toothbrush (1) as claimed in any one of the preceding patent claims 19 to 27, **characterized in that** the rocker arm (11) is provided with a tube (13) which extends in the direction of the brush attachment (3) and in which the shaft (20) is arranged, said tube (13) extending from the handle (2) by means of an elastic element, in particular an elastic diaphragm (18), an elastic bellows or the like.

29. The electric toothbrush (1) as claimed in any one of the preceding patent claims 19 to 28, **characterized in that** the motor shaft (31) of the electric motor (8) and the shaft (20) which is in particular part of the rocker arm assembly (11) are connected with each other by way of a four-bar linkage (30).

30. The electric toothbrush (1) as claimed in any one of the preceding patent claims, **characterized in that** a frame (6) is provided which supports a rocker arm (11) and which is itself housed inside the handle (2).

31. The electric toothbrush (1) as claimed in claim 30, **characterized in that** the electric motor (8) is mounted on the frame (6).

32. The electric toothbrush (1) as claimed in any one of the preceding patent claims 30 or 31, **characterized in that** the frame (6) is elastically mounted in the handle (2).

33. The electric toothbrush as claimed in any one of the preceding claims, **characterized in that** the shaft (20) is mounted in the handle (2) so as to be not allowed to swivel with respect to the axis (12) and is connected to the brush shaft (23) by means of a balancing coupling.

34. The electric toothbrush as claimed in any one of the preceding claims, **characterized in that** one coupling member, in particular a tube (13) of the handle (2), is mounted in the handle (2) so as to be permitted to swivel with respect to the axis (12).

35. The electric toothbrush as claimed in any one of the preceding claims 2 to 34, **characterized in that** the shaft (20) can be put in an oscillating or continuous rotary movement around the axis (21) or in reciprocating stroke movements in the direction of the axis (21).

## Revendications

1. Brosse à dents électrique (1) comportant un élément de préhension (2) dans lequel est logé un moteur électrique (8) et comportant un arbre (20) qui est en liaison d'entraînement avec le moteur électrique (8) et auquel peut être accouplé un élément de brosse (3) comportant un support de poils (26) qui peut tourner autour d'un axe (27), pour la production d'un mouvement de rotation (49) oscillant ou continu du support de poils (26),
***caractérisée en ce que*** l'élément de brosse (3) accouplé à l'élément de préhension (2) exécute un mouvement oscillant pivotant ou de course (50) présentant un direction de mouvement qui est orientée essentiellement parallèlement à l'axe (27).

2. Brosse à dents électrique suivant la revendication 1, **caractérisée en ce que** l'élément de brosse exécute un mouvement pivotant ou de course (50) autour d'un axe (12) qui est agencé essentiellement transversalement par rapport à l'axe (21) qui s'étend selon la direction longitudinale de l'arbre (20).

3. Brosse à dents électrique suivant la revendication 2, **caractérisée en ce que** l'axe (12) est agencé dans l'élément de préhension (2).

4. Brosse à dents électrique (1) suivant l'une des revendications précédentes, **caractérisée en ce que** la fréquence du mouvement pivotant ou de course (50) présente une valeur supérieure, de préférence approximativement de deux à trois fois la valeur de la fréquence du mouvement de rotation (49).

5. Brosse à dents électrique (1) suivant l'une des revendications précédentes, **caractérisée en ce que** la direction du mouvement de rotation (49) et la direction du mouvement pivotant ou de course (50) sont orientées sensiblement perpendiculairement l'une à l'autre.

6. Brosse à dents électrique (1) suivant l'une des revendications précédentes, **caractérisée en ce que** l'amplitude du mouvement pivotant ou de course (50) se situe dans la plage entre plus ou moins 0,02 mm et plus ou moins 0,2 mm et est de préférence d'approximativement plus ou moins 0,05 mm.

7. Brosse à dents électrique (1) suivant l'une des revendications précédentes, **caractérisée en ce que** la fréquence du mouvement de rotation (49) est d'approximativement 60 à 70 Hz, de préférence d'approximativement 65 Hz et **en ce que** la fréquence du mouvement pivotant ou de course (50) est d'approximativement 120 à 210 Hz, de préférence d'approximativement 165 Hz.

8. Brosse à dents électrique (1) suivant l'une des revendications précédentes, **caractérisée en ce que** les fréquences du mouvement de rotation (49) et du mouvement pivotant ou de course (50) sont accordées l'une à l'autre de façon à ce qu'une même relation de phase de l'oscillation superposée n'apparaît à nouveau qu'après une pluralité de cycles d'oscillations, en particulier après plus que quatre cycles d'oscillations.

9. Brosse à dents électrique (1) suivant l'une des revendications précédentes, **caractérisée en ce que** le rapport des fréquences du mouvement de rotation (49) et du mouvement de course (50) est une valeur finie ou une fraction périodique ou une fraction non périodique.

10. Brosse à dents électrique (1) suivant l'une des revendications précédentes, **caractérisée en ce que** les fréquences du mouvement de rotation (49) et du mouvement de course (50) sont indépendantes l'une de l'autre.

11. Brosse à dents électrique (1) suivant l'une des revendications précédentes, **caractérisée en ce que** le mouvement de rotation (49) et le mouvement de course (50) du support de poils (26) sont produits directement ou indirectement par le moteur électrique (8).

12. Brosse à dents électrique (1) suivant l'une des revendications 1 à 10 précédentes, **caractérisée en ce que** le mouvement de rotation (49) est produit par le moteur électrique (8) et le mouvement de course (50) par des moyens d'entraînement qui en sont indépendants.

13. Brosse à dents électrique (1) suivant l'une des revendications précédentes, **caractérisée en ce que** le mouvement de course (50) est produit par un autre moteur électrique ou par un générateur d'oscillations électromagnétiques ou par un actuateur piézoélectrique.

14. Brosse à dents électrique (1) suivant l'une des revendications précédentes, **caractérisée en ce que** le mouvement de course (50) du support de poils (26) arrive automatiquement à l'arrêt lors d'un dépassement d'une force (51) déterminée qui agit sur les poils (4).

15. Brosse à dents électrique (1) suivant la revendication 14, **caractérisée en ce que** sont prévus des moyens avec lesquels la force (51) peut être réglée individuellement par un utilisateur.

16. Brosse à dents électrique (1) suivant l'une des revendications précédentes, **caractérisée en ce que** le mouvement de course (50) peut être arrêté par un utilisateur.

17. Brosse à dents électrique (1) suivant l'une des revendications précédentes, **caractérisée en ce que** le mouvement de rotation (49) est oscillant et est effectué autour d'un axe (27) orienté approximativement parallèlement aux poils (4) du support de poils (26).

18. Brosse à dents électrique (1) suivant l'une des revendications précédentes, **caractérisée en ce que** le mouvement de course (50) du support de poils (26) est orienté approximativement parallèlement aux poils (4).

19. Brosse à dents électrique (1) suivant l'une des revendications précédentes, **caractérisée en ce que** l'arbre (20) et/ou l'élément de brosse (3) accouplé à l'élément de préhension (2) sont des éléments constitutifs d'une partie oscillante (11) qui est montée, dans l'élément de préhension (2), de manière à pivoter approximativement transversalement à l'axe (21), en particulier autour de l'axe (12).

20. Brosse à dents électrique (1) suivant la revendication 19, **caractérisée en ce que** le moteur électrique (8) est accouplé à des moyens, pour la production de vibrations ou d'oscillations, qui agissent sur un bras (14), de la partie oscillante (11), opposé à l'élément de brosse (2).

21. Brosse à dents électrique (1, 52) suivant la revendication 20, **caractérisée en ce que**, comme moyens pour la production de vibrations ou d'oscillations, il est prévu un excentrique (53) qui est agencé sur l'arbre (31) du moteur électrique (8) et contre lequel est appuyé le bras (14) de la partie oscillante (11).

22. Brosse à dents électrique (1, 52) suivant la revendication 21, **caractérisée en ce que** le bras (14) est équipé d'un patin ou d'un galet (54) contre lequel l'excentrique (53) est en appui.

23. Brosse à dents électrique (1) suivant l'une des revendications 21 et 22 précédentes, **caractérisée en ce que**, en tant qu'excentrique (53), il est prévu un cylindre comportant deux ou plusieurs bosses contre lesquelles le bras (14) est en appui au moyen d'un galet (54) ou d'un patin.

24. Brosse à dents électrique (1) suivant l'une des revendications précédentes, **caractérisée en ce que** sur l'arbre de moteur (31) est fiché une douille excentrée qui porte un roulement à billes (43) ou élément semblable.

25. Brosse à dents électrique (1) suivant l'une des revendications précédentes, **caractérisée en ce que**, en tant qu'excentrique (53), il est prévu un roulement, en particulier un roulement à billes (43) comportant une bague interne excentrée (44) qui est agencée sur l'arbre de moteur (31).

26. Brosse à dents électrique (1) suivant l'une des revendications 20 à 25 précédentes, **caractérisée en ce qu'**il est prévu un élément de ressort, en particulier un ressort de flexion (48), un ressort de compression bobiné ou un élément semblable, par lequel le bras (14) de la partie oscillante (11) est pressé en direction de l'arbre de moteur (31), en particulier contre un excentrique (53) de l'arbre de moteur (31).

27. Brosse à dents électrique (1) suivant l'une des revendications 21 à 26, **caractérisée en ce que**, lors d'un dépassement d'une force (51), du bras (14), qui agit sur les poils (4) du support de poils (26), le bras (14) est retiré de l'excentrique (53) de l'arbre de moteur (31).

28. Brosse à dents électrique (1) suivant l'une des revendications 19 à 27 précédentes, **caractérisée en ce que** la partie oscillante (11) présente un tube (13) qui s'étend en direction de l'élément de brosse (3) et dans lequel l'arbre (20) est agencé, le tube (13) étant amené hors de l'élément de préhension (2) à travers un moyen élastique, en particulier une membrane élastique (18), un soufflet élastique ou un élément semblable.

29. Brosse à dents électrique (1) suivant l'une des revendications 19 à 28 précédentes, **caractérisée en ce que** l'arbre de moteur (31) du moteur électrique (8) et l'arbre (20) qui forme en particulier un élément constitutif de la partie oscillante (11) sont reliés l'un à l'autre par un quadrilatère articulé (30).

30. Brosse à dents électrique (1) suivant l'une des revendications précédentes, **caractérisée en ce qu'**il est prévu un châssis (6) sur lequel est montée une partie oscillante (11) et qui est logé dans l'élément de préhension (2).

31. Brosse à dents électrique (1) suivant la revendication 30, **caractérisée en ce que** le moteur électrique (8) est retenu sur le châssis (6).

32. Brosse à dents électrique (1) suivant l'une des revendications 31 et 32 précédentes, **caractérisée en ce que** le châssis (6) est retenu de manière élastique dans l'élément de préhension (2).

33. Brosse à dents électrique (1) suivant l'une des revendications précédentes, **caractérisée en ce que** l'arbre (20) est monté, dans l'élément de préhension (2), de manière non pivotante par rapport à l'axe (12) et est relié à l'arbre de brosses (23) au moyen d'un accouplement de compensation.

34. Brosse à dents électrique (1) suivant l'une des revendications précédentes, **caractérisée en ce qu'**une pièce d'accouplement, en particulier un tube (13) de l'élément de préhension (2), est monté, dans l'élément de préhension (2), de manière pivotante par rapport à l'axe (12).

35. Brosse à dents électrique (1) suivant l'une des revendications 2 à 34 précédentes, **caractérisée en ce que** l'arbre (20) peut être mis en mouvement de rotation oscillant ou continu autour de l'axe (21) ou en mouvements de course en va-et-vient dans la direction de l'axe (21).
